# EUROPEAN PATENT APPLICATION

(11) **EP 3 228 655 A1**
(43) Date of publication of application: **11.10.2017**
(21) Application number: 15865733.8
(22) Date of filing: 18.11.2015
(51) Int. Cl.: C08J 3/07, C09J 11/06, C09J 123/00, C09J 133/06, C09J 161/06

(54) **AQUEOUS DISPERSION OF ALPHA-OLEFIN-(METH)ACRYLIC ACID ESTER-BASED RUBBER PARTICLES, METHOD FOR PREPARING SAME, MOLDED BODY, AND RESORCIN-FORMALIN-LATEX ADHESIVE**

(30) Priority: 02.12.2014 JP 2014244125
(71) Applicant: Sumitomo Seika Chemicals Co., Ltd., Kako-gun, Hyogo 675-0145 (JP)
(72) Inventor: MIYAZAKI, Hiromasa, Himeji-shi Hyogo 672-8076 (JP); SUGIHARA, Norihiro, Himeji-shi Hyogo 672-8076 (JP); SAWADA, Kohei, Himeji-shi Hyogo 672-8076 (JP)
(74) Representative: Webster, Jeremy Mark
(86) International application number: PCT/JP2015/082412
(87) International publication number: WO 2016/088556

(57) **Abstract**

The present invention aims to provide an aqueous dispersion of α-olefin-(meth)acrylic acid ester-based rubber particles having better storage stability and ensuring better oil resistance of a molded body. The present invention also aims to provide a method for producing the aqueous dispersion, a molded body and a resorcin-formalin-latex adhesive each produced using the aqueous dispersion. The present invention relates to an aqueous dispersion of α-olefin-(meth)acrylic acid ester-based rubber particles including: an aqueous medium, a surfactant; and α-olefin-(meth)acrylic acid ester-based rubber particles, the aqueous dispersion containing the surfactant in an amount of 1 to 15 parts by mass relative to 100 parts by mass of the α-olefin-(meth)acrylic acid ester-based rubber particles.

## Description

### TECHNICAL FIELD

The present invention relates to an aqueous dispersion of α-olefin-(meth)acrylic acid ester-based rubber particles having better storage stability and ensuring better oil resistance of a molded body. The present invention also relates to a method for producing the aqueous dispersion, and a molded body and a resorcin-formalin-latex adhesive each produced using the aqueous dispersion.

### BACKGROUND ART

In industrial rubber products, various rubber materials are used, such as ethylene-propylene-diene rubber (EPDM), styrene-butadiene rubber (SBR), natural rubber (NR), nitrile butadiene rubber (NBR), hydrogenated acrylonitrile butadiene rubber (HNBR), and chloroprene rubber (CR). In particular, HNBR is widely used for automobile components such as brake hoses, Vee belts, and transmission belts (e.g., timing belts) because of its better properties including heat resistance, oil resistance, ozone resistance, abrasion resistance, and electrical properties. According to the trend of downsizing of engines and energy saving, a timing belt in oil that can be installed inside the engine has been developed, leading to a demand for materials with high oil and heat resistance.

With the purpose of enhancing the strength or durability, transmission belts such as timing belts are commonly formed using a composite material of a rubber material and fiber, such as organic fibers (e.g., polyester, aramid, polyamide) and glass fibers, as a reinforcing material. In such a composite material, rubber and reinforcing fiber are commonly bonded using an adhesive. For the purpose of forming an adhesive layer better not only in adhesiveness but also in properties such as heat resistance, oil resistance, weather resistance, abrasion resistance, and bending fatigue resistance, the adhesive used is an adhesive containing a rubber latex, such as a resorcin-formaldehyde-latex adhesive (hereafter, also referred to as a "RFL adhesive") (see Patent Literature 1, for example). An exemplary latex usable for the RFL adhesive is a butadiene-styrene copolymer latex, a dicarboxylated butadiene-styrene copolymer latex, a vinyl pyridine-butadiene-styrene terpolymer latex, a chloroprene latex, a chlorosulfonated polyethylene latex, or a HNBR latex. The creation of a novel high-performance latex having further better oil resistance and storage stability is demanded.

### CITATION LIST

### - Patent Literature

Patent Literature 1: JP 2010-031194 A

### SUMMARY OF INVENTION

### - Technical Problem

An object of the present invention is to provide an aqueous dispersion of α-olefin-(meth)acrylic acid ester-based rubber particles having better storage stability and ensuring better oil resistance of a molded body. An object of the present invention also is to provide a method for producing the aqueous dispersion, a molded body and a resorcin-formalin-latex adhesive each produced using the aqueous dispersion.

The present invention relates to an aqueous dispersion of α-olefin-(meth)acrylic acid ester-based rubber particles comprising: an aqueous medium, a surfactant; and α-olefin-(meth)acrylic acid ester-based rubber particles, the aqueous dispersion containing the surfactant in an amount of 1 to 15 parts by mass relative to 100 parts by mass of the α-olefin-(meth)acrylic acid ester-based rubber particles.

The present invention is specifically described in the following.

The present inventors found out that an aqueous dispersion of α-olefin-(meth)acrylic acid ester-based rubber particles containing an aqueous medium, α-olefin-(meth)acrylic acid ester-based rubber particles, and a specific amount of a surfactant has better storage stability and ensures better oil resistance of a molded body, thereby completing the present invention.

The aqueous dispersion of α-olefin-(meth)acrylic acid ester-based rubber particles of the present invention contains α-olefin-(meth)acrylic acid ester-based rubber particles.

The α-olefin-(meth)acrylic acid ester-based rubber particles are rubber particles containing a copolymer having an α-olefin-derived structural unit and a (meth)acrylic acid ester-derived structural unit.

The term "(meth)acrylic" as used herein means at least one of "acrylic" and "methacrylic".

Examples of the α-olefin used as a raw material of the α-olefin-(meth)acrylic acid ester-based rubber include ethylene, propylene, 1-butene, 1-pentene, 1-hexene, 1-heptene, and 1-octene. Preferred among these is ethylene.

Examples of the (meth)acrylic acid ester used as a raw material of the α-olefin-(meth)acrylic acid ester-based rubber include methyl (meth)acrylate, ethyl (meth)acrylate, n-butyl (meth)acrylate, isobutyl (meth)acrylate, and 2-ethylhexyl (meth)acrylate. Preferred among these are methyl acrylate and ethyl acrylate.

The α-olefin-(meth)acrylic acid ester-based rubber constituting the α-olefin-(meth)acrylic acid ester-based rubber particles preferably contains at least one selected from the group consisting of an ethylene-(meth)acrylic acid ester copolymer, an ethylene-(meth)acrylic acid ester-unsaturated carboxylic acid copolymer, and an ethylene-vinyl acetate-(meth)acrylic acid ester copolymer.

In the ethylene-(meth)acrylic acid ester copolymer, the lower limit of the (meth)acrylic acid ester-derived structural unit content is preferably 25% by mass, and the upper limit thereof is preferably 80% by mass. When the (meth)acrylic acid ester-derived structural unit content is 25% by mass or more, the copolymer tends to have better oil resistance and grease resistance. When the (meth)acrylic acid ester-derived structural unit content is 80% by mass or less, the copolymer tends to have better flexibility at low temperature. The lower limit of the (meth)acrylic acid ester-derived structural unit content of the ethylene-(meth)acrylic acid ester copolymer is more preferably 30% by mass, and the upper limit thereof is more preferably 70% by mass.

The ethylene-(meth)acrylic acid ester copolymer may be either a binary copolymer including ethylene and a (meth)acrylic acid ester or a multi-component copolymer including ethylene, a (meth)acrylic acid ester, and a crosslinking site monomer. In particular, preferred is a multi-component copolymer including ethylene, a (meth)acrylic acid ester, and a crosslinking site monomer that is reactive with at least one of an epoxy resin and a curing agent.

In the case where the ethylene-(meth)acrylic acid ester copolymer is a multi-component copolymer, examples of the crosslinking site monomer used as a raw material of the multi-component copolymer rubber include maleic acid monoesters such as monomethyl maleate, monoethyl maleate, and monoisopropyl maleate, and unsaturated glycidyl monocarboxylate such as glycidyl (meth)acrylate. Preferred among these are maleic acid monoesters.

The lower limit of the crosslinking site monomer-derived structural unit content of the multi-component copolymer is preferably 0.1% by mass, and the upper limit thereof is preferably 10% by mass. When the crosslinking site monomer-derived structural unit content is 0.1% by mass or more, the copolymer tends to have better oil resistance. When the crosslinking site monomer-derived structural unit content is 10% by mass or less, the copolymer tends to have better strength and oil resistance. The lower limit of the crosslinking site monomer-derived structural unit content is more preferably 0.3% by mass and the upper limit thereof is more preferably 7% by mass.

The lower limit of the melt flow rate of the ethylene-(meth)acrylic acid ester copolymer at 190°C and a load of 2,160 g is preferably 0.1 g/10 min, and the upper limit thereof is preferably 120 g/10 min. When the melt flow rate is 0.1 g/10 min or more, the copolymer tends to have better strength and oil resistance. When the melt flow rate is 120 g/10 min or less, the molten ethylene-(meth)acrylic acid ester copolymer tends to have better flowability to be more easily moldable. The lower limit of the melt flow rate of the ethylene-(meth)acrylic acid ester copolymer is more preferably 0.3 g/10 min and the upper limit thereof is more preferably 30 g/10 min.

The "melt flow rate" can be determined by using a melt indexer (e.g., "L240" available from Technol Seven Co., Ltd.).

Examples of the unsaturated carboxylic acid used as a raw material of the ethylene-(meth)acrylic acid ester-unsaturated carboxylic acid copolymer include acrylic acid, methacrylic acid, ethacrylic acid, fumaric acid, maleic acid, and maleic anhydride. Preferred among these are acrylic acid and methacrylic acid.

In the ethylene-(meth)acrylic acid ester-unsaturated carboxylic acid copolymer, the lower limit of the (meth)acrylic acid ester-derived structural unit content is preferably 0.5% by mass, and the upper limit thereof is preferably 50% by mass. When the (meth)acrylic acid ester-derived structural unit content is 0.5% by mass or more, the copolymer tends to have better oil resistance and low-temperature characteristics. When the (meth)acrylic acid ester-derived structural unit content is 50% by mass or less, the resulting aqueous dispersion is less likely to be thickened, preventing stickiness on the bonding surface when used as an adhesive. The lower limit of the (meth)acrylic acid ester-derived structural unit content of the ethylene-(meth)acrylic acid ester-unsaturated carboxylic acid copolymer is more preferably 1% by mass, and the upper limit thereof is more preferably 30% by mass.

In the ethylene-(meth)acrylic acid ester-unsaturated carboxylic acid copolymer, the lower limit of the unsaturated carboxylic acid-derived structural unit content is preferably 1% by mass, and the upper limit thereof is preferably 15% by mass. When the unsaturated carboxylic acid-derived structural unit content is 1% by mass or more, the aqueous dispersion to be obtained has sufficient adhesiveness. When the unsaturated carboxylic acid-derived structural unit content is 15% by mass or less, the copolymer can be sufficiently dissolved when being dissolved in a solvent. The lower limit of the unsaturated carboxylic acid-derived structural unit content of the ethylene-(meth)acrylic acid ester-unsaturated carboxylic acid copolymer is more preferably 3% by mass, and the upper limit thereof is more preferably 10% by mass.

The lower limit of the melt flow rate of the ethylene-(meth)acrylic acid ester-unsaturated carboxylic acid copolymer at 190°C and a load of 2,160 g is preferably 0.5 g/10 min, and the upper limit thereof is preferably 100 g/10 min. When the melt flow rate is 0.5 g/10 min or more, the copolymer tends to have better strength and oil resistance. When the melt flow rate is 100 g/10 min or less, the molten copolymer tends to have better flowability to be more easily moldable. The lower limit of the melt flow rate of the ethylene-(meth)acrylic acid ester-unsaturated carboxylic acid copolymer is more preferably 0.8 g/10 min, and the upper limit thereof is more preferably 80 g/10 min.

A vinyl acetate-derived structural unit in the ethylene-vinyl acetate-(meth)acrylic acid ester copolymer may be partially saponified.

The lower limit of the (meth)acrylic acid ester-derived structural unit content of the ethylene-vinyl acetate-(meth)acrylic acid ester copolymer is preferably 0.5% by mass, and the upper limit thereof is preferably 70% by mass. When the (meth)acrylic acid ester-derived structural unit content is 0.5% by mass or more, the copolymer tends to have better strength and oil resistance. When the (meth)acrylic acid ester-derived structural unit content is 70% by mass or less, the copolymer tends to have better flexibility and oil resistance. The lower limit of the (meth)acrylic acid ester-derived structural unit content of the ethylene-vinyl acetate-(meth)acrylic acid ester copolymer is more preferably 1% by mass, and the upper limit thereof is more preferably 60% by mass.

The lower limit of the vinyl acetate-derived structural unit content of the ethylene-vinyl acetate-(meth)acrylic acid ester copolymer is preferably 0.5% by mass, and the upper limit thereof is preferably 30% by mass. When the vinyl acetate-derived structural unit content is 0.5% by mass or more, the copolymer tends to have better heat resistance. When the vinyl acetate-derived structural unit content is 30% by mass or less, the copolymer tends to have better oil resistance. The lower limit of the vinyl acetate-derived structural unit content of the ethylene-vinyl acetate-(meth)acrylic acid ester copolymer is more preferably 1% by mass, and the upper limit thereof is more preferably 15% by mass.

The ethylene-vinyl acetate-(meth)acrylic acid ester copolymer may be either a ternary copolymer of ethylene, vinyl acetate, and (meth)acrylic acid ester or a multi-component copolymer of ethylene, vinyl acetate, (meth)acrylic acid ester, and a crosslinking site monomer. Preferred among these is a multi-component copolymer of ethylene, vinyl acetate, (meth)acrylic acid ester, and a crosslinking site monomer that is reactive with at least one of an epoxy resin and a curing agent.

The lower limit of the melt flow rate of the ethylene-vinyl acetate-(meth)acrylic acid ester copolymer at 190°C and a load of 2,160 g is preferably 0.2 g/10 min, and the upper limit thereof is preferably 200 g/10 min. When the melt flow rate is 0.2 g/10 min or more, the copolymer tends to have better strength and oil resistance. When the melt flow rate is 200 g/10 min or less, the molten copolymer tends to have better flowability to be more easily moldable. The lower limit of the melt flow rate of the ethylene-vinyl acetate-(meth)acrylic acid ester copolymer is more preferably 1.0 g/10 min, and the upper limit thereof is more preferably 180 g/10 min.

The lower limit of the Mooney viscosity (ML₁₊₄) measured at 100°C in conformity with DIN53 523 of the α-olefin-(meth)acrylic acid ester-based rubber constituting the α-olefin-(meth)acrylic acid ester-based rubber particles is preferably 5, and the upper limit thereof is preferably 80. When the Mooney viscosity is 5 or more, appropriately small rubber particles can be obtained, so that the aqueous dispersion to be obtained tends to have better storage stability (especially, stability on standing). When the Mooney viscosity is 80 or less, the molecular weight of the α-olefin-(meth)acrylic acid ester-based rubber is not too low, so that a molded body with sufficient strength can be obtained. The lower limit of the Mooney viscosity is more preferably 16, and the upper limit thereof is more preferably 55.

The α-olefin-(meth)acrylic acid ester-based rubber can be prepared by, for example, radical copolymerization at high temperature and high pressure.

Examples of commercially available products of the α-olefin-(meth)acrylic acid ester-based rubber include: ethylene-(meth)acrylic acid ester copolymers and ethylene-(meth)acrylic acid ester-unsaturated carboxylic acid copolymers such as Vamac G, Vamac GLS, Vamac GXF, and Vamac DP (all available from Du Pont-Mitsui Polychemicals); and ethylene-vinyl acetate-(meth)acrylic acid ester copolymers such as DENKA ER A403, DENKA ER A804, DENKA ER 8401, and DENKA ANX-3 (all available from Denka Company Ltd.).

One type of the α-olefin-(meth)acrylic acid ester-based rubber particles may be used alone, or two or more types of α-olefin-(meth)acrylic acid ester-based rubber particles may be used in combination, such as those different in the structural unit contents, those subjected to modification, or those different in the type of the α-olefin used as a raw material.

The lower limit of the average particle size of the α-olefin-(meth)acrylic acid ester-based rubber particles is preferably 0.1 µm, and the upper limit thereof is preferably 5 µm. When the average particle size of the α-olefin-(meth)acrylic acid ester-based rubber particles is 0.1 µm or more, the viscosity of the aqueous dispersion of α-olefin-(meth)acrylic acid ester-based rubber particles to be obtained tends to be not too high, leading to easy handleability of the aqueous dispersion. When the average particle size of the α-olefin-(meth)acrylic acid ester-based rubber particles is 5 µm or less, the aqueous dispersion of α-olefin-(meth)acrylic acid ester-based rubber particles to be obtained tends to have better storage stability (especially, stability on standing). The average particle size of the α-olefin-(meth)acrylic acid ester-based rubber particles can be appropriately adjusted by controlling the mixing condition in the preparation method described later.

The "average particle size of the α-olefin-(meth)acrylic acid ester-based rubber particles" is a value determined by analyzing the obtained aqueous dispersion of α-olefin-(meth)acrylic acid ester-based rubber particles using a laser diffraction particle size analyzer (e.g., "SALD-2000J" available from Shimadzu Corporation).

The aqueous dispersion of α-olefin-(meth)acrylic acid ester-based rubber particles of the present invention contains a surfactant.

Examples of the surfactant include anionic surfactants and nonionic surfactants.

Examples of the anionic surfactants include fatty acid salts such as fatty acid sodium and fatty acid potassium, polyoxyalkylene (alkyl or alkenyl) ether sulfates, polyoxyalkylene alkyl phenyl ether sulfates, alkyl benzene sulfonates, alkyl naphthalene sulfonates, alkyl diphenyl sulfonates, α-olefin sulfonates, alkyl sulfate ester salts, formalin condensates of naphthalene sulfonates, sulfosuccinates, polyoxyethylene alkyl ether acetates, and rosinates.

Preferred among these are sulfosuccinates, polyoxyalkylene (alkyl or alkenyl) ether sulfates, and fatty acid salts because they are better in emulsion dispersibility and stability and are easily available at low cost.

The sulfosuccinate used is preferably a compound represented by Formula (1):

XO₃SCH(CH₂COOR¹)COOR² (1)

wherein X represents sodium, potassium, an amino group, or an ammonium group, R¹ and R² may be the same as or different from each other and each represent a C5-C12 alkyl group or a phenyl group.

Specific examples of the sulfosuccinates include dioctyl sulfosuccinates, di(ethylhexyl)sulfosuccinates, alkyl phenyl sulfosuccinates, and didodecyl sulfosuccinates. Preferred among these are dioctyl sulfosuccinates.

The polyoxyalkylene (alkyl or alkenyl) ether sulfate used is preferably a compound represented by Formula (2):

R³O(AO)ₙSO₃X (2)

wherein X represents sodium, potassium, an amino group, or an ammonium group, R³ represents a C5-C24 alkyl group or a C5-C24 alkenyl group, n represents an integer of 2 to 50, and (AO)ₙ represents - (-C₂H₄O-)ₙ₁-(-C₃H₆O-)ₙ₂- (n1 represents an integer of 0 to 50, n2 represents an integer of 0 to 50, the total of n1 and n2 is n, when both n1 and n2 are not 0, the sequence of (-C₂H₄O-) and (-C₃H₆O-) is not particularly limited, and may be a block or random sequence).

Specific examples of the polyoxyalkylene (alkyl or alkenyl) ether sulfates include polyoxyalkylene lauryl ether sulfates and polyoxyalkylene oleyl ether sulfates.

Examples of the polyoxyalkylene lauryl ether sulfates include sodium polyoxyalkylene lauryl ether sulfate such as sodium polyoxyethylene lauryl ether sulfate and ammonium polyoxyalkylene lauryl ether sulfates such as ammonium polyoxyethylene lauryl ether sulfate.

Examples of the polyoxyalkylene oleyl ether sulfates include: sodium polyoxyalkylene oleyl ether sulfates such as sodium polyoxyethylene oleyl ether sulfate and sodium polyoxy propylene oleyl ether sulfate; and ammonium polyoxyalkylene oleyl ether sulfates such as ammonium polyoxyethylene oleyl ether sulfate.

In particular, preferred are polyoxyalkylene lauryl ether sulfates, more preferred are sodium polyoxyalkylene lauryl ether sulfates, and still more preferred is sodium polyoxyethylene lauryl ether sulfate.

The fatty acid salt used is preferably a compound represented by Formula (3):

R⁴COOX (3)

wherein X represents sodium, potassium, an amino group, or an ammonium group, and R⁴ represents a C5-C24 alkyl group or a C5-C24 alkenyl group.

Specific examples of the fatty acid salt include oleates, stearates, laurates, myristates, and palmitates. Preferred among these are oleates.

Examples of the nonionic surfactant include polyethylene glycols, ethylene oxide-propylene oxide copolymers, polyoxyethylene alkyl ethers, polyoxyethylene alkyl phenyl ethers, polyoxyethylene alkyl thioethers, polyoxyethylene sorbitan fatty acid monoesters, polyoxyethylene alkylamides, and polyglycerin esters. Preferred among these are polyethylene glycols, ethylene oxide-propylene oxide copolymers, polyoxyethylene alkyl ethers, polyoxyethylene alkyl phenyl ethers, and polyoxyethylene sorbitan fatty acid monoesters. More preferred are ethylene oxide-propylene oxide copolymers because they are better in emulsion dispersibility and heat resistance.

The ethylene oxide-propylene oxide copolymer used is preferably a compound represented by Formula (4):

HO(CH₂CH₂O)ₚ(CH₂CH(CH₃)O)_{q}(CH₂CH₂O)ᵣH (4)

wherein p represents an integer of 2 to 300, q represents an integer of 10 to 150, and r represents an integer of 2 to 300.

The lower limit of the mass average molecular weight of the ethylene oxide-propylene oxide copolymer is preferably 3,000, and the upper limit thereof is preferably 30,000. When the mass average molecular weight of the ethylene oxide-propylene oxide copolymer is 3,000 or more, the surfactant (emulsifier) tends to have better dispersion stability to further improve the storage stability of the aqueous dispersion. When the mass average molecular weight of the ethylene oxide-propylene oxide copolymer is 30,000 or less, the surfactant (emulsifier) tends to have higher emulsifying power to further improve the storage stability of the aqueous dispersion. The lower limit of the mass average molecular weight of the ethylene oxide-propylene oxide copolymer is more preferably 6,000, and the upper limit thereof is more preferably 25,000. The lower limit is still more preferably 8,000, and the upper limit is still more preferably 20,000.

The lower limit of the ethylene oxide unit content of the ethylene oxide-propylene oxide copolymer is preferably 40% by mass, and the upper limit thereof is preferably 95% by mass. When the ethylene oxide unit content is 40% by mass or more, the surfactant (emulsifier) tends to have better dispersion stability to further improve the storage stability of the aqueous dispersion. When the ethylene oxide unit content is 95% by mass or less, the surfactant (emulsifier) tends to have higher emulsifying power to further improve the storage stability of the aqueous dispersion. The lower limit of the ethylene oxide unit content is more preferably 45% by mass, and the upper limit thereof is more preferably 90% by mass. The lower limit is still more preferably 50% by mass, and the upper limit is still more preferably 85% by mass.

The surfactant may be used alone, or two or more surfactants may be used in combination. In the case where two or more surfactants are used in combination, the anionic surfactant and the nonionic surfactant may be used in combination.

In particular, the surfactant preferably contains at least one compound selected from the group consisting of sulfosuccinates, polyoxyalkylene (alkyl or alkenyl) ether sulfates, fatty acid salts, and ethylene oxide-propylene oxide copolymers.

The lower limit of the amount of the surfactant is 1 part by mass, and the upper limit thereof is 15 parts by mass relative to 100 parts by mass of the α-olefin-(meth)acrylic acid ester-based rubber particles. When the amount of the surfactant is 1 part by mass or more, a stable aqueous dispersion can be obtained. When the amount of the surfactant is 15 parts by mass or less, emulsification is facilitated and a molded body can be obtained without lowering the properties such as adhesiveness and without causing bleeding on the surface due to the surfactant. The lower limit of the amount of the surfactant is preferably 1.2 parts by mass, and the upper limit thereof is preferably 12 parts by mass. The lower limit is more preferably 1.5 parts by mass, and the upper limit is more preferably 10 parts by mass.

With a purpose of facilitating emulsification to obtain a more stable aqueous dispersion, the aqueous dispersion of α-olefin-(meth)acrylic acid ester-based rubber particles of the present invention may contain a polymeric dispersion stabilizer, provided that the aim of the present invention is not interfered.

The polymeric dispersion stabilizer may be, for example, polyvinyl alcohol, hydroxyethyl cellulose, methyl cellulose, hydroxypropyl cellulose, polyvinyl pyrrolidone, a polyacrylate, a polyacrylate ester salt, and sodium alginate.

In the case of using the polymeric dispersion stabilizer, the amount of the polymeric dispersion stabilizer is preferably 0.1 to 10 parts by mass relative to 100 parts by mass of the α-olefin-(meth)acrylic acid ester-based rubber particles.

The aqueous dispersion of α-olefin-(meth)acrylic acid ester-based rubber particles of the present invention contains an aqueous medium.

Examples of the aqueous medium include water and mixtures of water with an aqueous organic solvent such as methyl alcohol, ethyl alcohol, or isopropyl alcohol. Preferred is water.

The lower limit of the amount of the aqueous medium is preferably 40 parts by mass, and the upper limit thereof is preferably 1,000 parts by mass relative to 100 parts by mass of the α-olefin-(meth)acrylic acid ester-based rubber particles. When the amount of the aqueous medium is 40 parts by mass or more, the aqueous dispersion to be obtained tends to be more stable. When the amount of the aqueous medium is 1,000 parts by mass or less, a molded body tends to be produced more efficiently. The lower limit of the amount of the aqueous medium is more preferably 50 parts by mass, and the upper limit thereof is more preferably 150 parts by mass.

The aqueous dispersion of α-olefin-(meth)acrylic acid ester-based rubber particles of the present invention can be obtained by emulsion dispersion of an α-olefin-(meth)acrylic acid ester-based rubber in an aqueous medium in the presence of a surfactant.

The present invention also encompasses a method for producing the aqueous dispersion of α-olefin-(meth)acrylic acid ester-based rubber particles of the present invention, the method including: a step of mixing an organic solution containing an α-olefin-(meth)acrylic acid ester-based rubber dissolved in an organic solvent and an aqueous solution containing a surfactant dissolved in an aqueous medium to prepare an emulsion; and a step of distilling off the organic solvent from the obtained emulsion, and a method for producing the aqueous dispersion of α-olefin-(meth)acrylic acid ester-based rubber particles, the method including: a step of mixing an α-olefin-(meth)acrylic acid ester-based rubber, a surfactant, and an aqueous medium to prepare a liquid mixture; and a step of emulsifying the obtained liquid mixture by heating to a temperature not lower than the softening temperature of the α-olefin-(meth)acrylic acid ester-based rubber.

Hereinafter, among the methods for producing the aqueous dispersion of α-olefin-(meth)acrylic acid ester-based rubber particles of the present invention, the method including: a step of mixing an organic solution containing an α-olefin-(meth)acrylic acid ester-based rubber dissolved in an organic solvent and an aqueous solution containing a surfactant dissolved in an aqueous medium to prepare an emulsion; and a step of distilling off the organic solvent from the obtained emulsion is referred to as a production method 1 of the present invention. The method including: a step of mixing an α-olefin-(meth)acrylic acid ester-based rubber, a surfactant, and an aqueous medium to prepare a liquid mixture; and a steps of emulsifying the obtained liquid mixture by heating to a temperature not lower than the softening temperature of the α-olefin-(meth)acrylic acid ester-based rubber is referred to as a production method 2 of the present invention.

In the production method 1 of the present invention, an α-olefin-(meth)acrylic acid ester-based rubber may be dissolved in an organic solvent by adding the α-olefin-(meth)acrylic acid ester-based rubber to the organic solvent.

Examples of the organic solvent dissolving the α-olefin-(meth)acrylic acid ester-based rubber include: acyclic aliphatic hydrocarbon-based organic solvents such as pentane, hexane, heptane, and octane; cyclic aliphatic hydrocarbon-based organic solvents such as cyclohexane and decalin; aromatic hydrocarbon-based organic solvents such as toluene, xylene, ethyl benzene, and tetralin; and halogenated hydrocarbon-based organic solvents such as chloroform and 1,2-dichloroethane. These organic solvents may be used alone, or in combination of two or more thereof.

The organic solvent may be used in combination with a lower alcohol such as methanol, ethanol, isopropyl alcohol, or t-butanol as a dissolution aid. A solvent mixture of an aromatic hydrocarbon-based organic solvent or a cyclic aliphatic hydrocarbon-based organic solvent with a lower alcohol is preferred as it is better in dissolving power of the α-olefin-(meth)acrylic acid ester-based rubber.

In the solvent mixture, the mixing ratio of the aromatic hydrocarbon-based organic solvent or cyclic aliphatic hydrocarbon-based organic solvent and the lower alcohol is not particularly limited. An amount of 100 parts by mass of the aromatic hydrocarbon-based organic solvent or cyclic aliphatic hydrocarbon-based organic solvent is preferably mixed with 5 to 100 parts by mass of the lower alcohol, more preferably mixed with 10 to 60 parts by mass of the lower alcohol.

The amount of the organic solvent is not particularly limited, and is preferably adjusted to set the concentration of the α-olefin-(meth)acrylic acid ester-based rubber in the organic solution to be obtained to 3 to 30% by mass. When the concentration of the α-olefin-(meth)acrylic acid ester-based rubber in the organic solution is 3 to 30% by mass, the α-olefin-(meth)acrylic acid ester-based rubber tends to be more uniformly dissolved in the organic solution, so that the particle size of the α-olefin-(meth)acrylic acid ester-based rubber in the aimed aqueous dispersion of the α-olefin-(meth)acrylic acid ester-based rubber can be appropriately small.

The temperature at which the α-olefin-(meth)acrylic acid ester-based rubber is dissolved in the organic solvent is not particularly limited, and is normally 100°C or lower.

In the production method 1 of the present invention, a surfactant can be dissolved in an aqueous medium by adding the surfactant to the aqueous medium.

When the surfactant is dissolved in the aqueous medium, the amount of the surfactant is preferably set such that the concentration thereof in the aqueous solution to be obtained becomes 0.1 to 50% by mass.

In the step of mixing an organic solution containing the α-olefin-(meth)acrylic acid ester-based rubber dissolved in an organic solvent and an aqueous solution containing a surfactant dissolved in an aqueous medium to prepare an emulsion, the mixing ratio of the organic solution and the aqueous solution is determined to set the amount of the surfactant relative to the amount of the α-olefin-(meth)acrylic acid ester-based rubber particles within the range described above. Normally, the lower limit of the mixing ratio of the aqueous solution relative to 100 parts by mass of the organic solution is preferably 20 parts by mass, and the upper limit thereof is preferably 500 parts by mass. When the mixing ratio of the aqueous solution is 20 parts by mass or more, the viscosity of the resulting emulsion tends not to be too high, resulting in easy emulsification. When the mixing ratio of the aqueous solution is 500 parts by mass or less, the emulsion tends to be efficiently obtained. The lower limit of the mixing ratio of the aqueous solution is more preferably 25 parts by mass, and the upper limit thereof is more preferably 200 parts by mass.

The organic solution and the aqueous solution are mixed, for example, by stirring them with an emulsifier such as a homomixer or a colloid mill or by dispersion using an ultrasonic disperser, thereby preparing an emulsion. In particular, stirring with an emulsifier is preferred. The temperature during emulsification is preferably within a range of 5°C to 70°C.

Upon mixing of the organic solution and the aqueous solution using an emulsifier or an ultrasonic disperser, the average particle size of the α-olefin-(meth)acrylic acid ester-based rubber particles can be controlled to the above preferable range by appropriately adjusting the number of rotations of the stirrer, stirring time, temperature, and the like. The average particle size of the α-olefin-(meth)acrylic acid ester-based rubber particles can be controlled to the above preferable range not only by adjusting the number of rotations of the stirrer or stirring time but also by adjusting the selection or amount of the surfactant.

In the production method 1 of the present invention, the organic solvent is distilled off from the emulsion obtained by the above method, thereby preparing the aqueous dispersion of α-olefin-(meth)acrylic acid ester-based rubber particles of the present invention.

The organic solvent can be distilled off, for example, by a known method such as heating of the emulsion under reduced pressure. After the distillation of the organic solvent, if necessary, the aqueous dispersion may be concentrated to a desired solid content concentration by heat concentration, centrifugation, wet separation, or the like.

In the case of preparing an aqueous dispersion of α-olefin-(meth)acrylic acid ester-based rubber particles containing the polymeric dispersion stabilizer, the polymeric dispersion stabilizer may be added when preparing the aqueous solution by adding a surfactant to an aqueous medium. Alternatively, the polymeric dispersion stabilizer may be added to the aqueous dispersion obtained by distilling off the organic solvent from the emulsion.

In the production method 2 of the present invention, the α-olefin-(meth)acrylic acid ester-based rubber, surfactant, and aqueous medium may be mixed, for example, by putting the α-olefin-(meth)acrylic acid ester-based rubber, surfactant, and aqueous medium into a container. The added amount of the surfactant is determined to set the amount of the surfactant relative to the amount of the α-olefin-(meth)acrylic acid ester-based rubber within the above range.

The container used for mixing the α-olefin-(meth)acrylic acid ester-based rubber, surfactant, and aqueous medium is preferably a pressure-resistant container equipped with a heater capable of heating the contents to the temperature not lower than the softening temperature of the α-olefin-(meth)acrylic acid ester-based rubber in the aqueous medium and a stirrer capable of applying a shear force onto the contents. For example, a pressure-resistant autoclave equipped with a stirrer or the like is suitably used.

In the production method 2 of the present invention, the emulsion obtained by the step of emulsifying the liquid mixture by heating to a temperature not lower than the softening temperature of the α-olefin-(meth)acrylic acid ester-based rubber is cooled to a room temperature, thereby obtaining the aqueous dispersion of α-olefin-(meth)acrylic acid ester-based rubber particles of the present invention. The average particle size of the α-olefin-(meth)acrylic acid ester-based rubber particles can be controlled to the above preferable range by appropriately adjusting the number of rotations of the stirrer, stirring time, temperature, and the like. The average particle size of the α-olefin-(meth)acrylic acid ester-based rubber particles can be controlled to the above preferable range not only by adjusting the number of rotations of the stirrer or stirring time but also by adjusting the selection or amount of the surfactant.

In the case of preparing an aqueous dispersion of α-olefin-(meth)acrylic acid ester-based rubber particles containing the polymeric dispersion stabilizer, the polymeric dispersion stabilizer may be added when preparing the aqueous solution by adding a surfactant to an aqueous medium. Alternatively, the polymeric dispersion stabilizer may be added to the aqueous dispersion obtained by cooling the emulsion to a room temperature.

The aqueous dispersion of α-olefin-(meth)acrylic acid ester-based rubber particles of the present invention is better in storage stability (especially, stability on standing) and molding processability.

For example, the aqueous dispersion of α-olefin-(meth)acrylic acid ester-based rubber particles of the present invention is applied to a substrate or poured into a molding frame, and then dried (moisture removal) to give a molded body, such as a coating film, a film, or a sheet, containing the α-olefin-(meth)acrylic acid ester-based rubber particles and surfactant.

The present invention also encompasses a molded body produced (formed) using the aqueous dispersion of α-olefin-(meth)acrylic acid ester-based rubber particles of the present invention.

The molded body of the present invention can be favorably produced by drying the aqueous dispersion of α-olefin-(meth)acrylic acid ester-based rubber particles of the present invention at a temperature of 40°C to 200°C.

Addition of a compounding solution for vulcanization such as a vulcanizing agent (hydrogen peroxide, sulfur, or the like), a vulcanization aid (TAC, TAIC, or the like), a vulcanization accelerator, or an antioxidant during production of the molded body of the present invention allows production of a molded body with better coating film characteristics.

The use of an above-described preferable surfactant allows the molded body of the present invention to be free from coloring caused by the surfactant or to hardly suffer bleeding of the surfactant.

Accordingly, the aqueous dispersion of α-olefin-(meth)acrylic acid ester-based rubber particles of the present invention can be widely used as a coating agent for plastic molded bodies, fibers, paper, films, or the like, a gas-barrier agent, a raw material for foam rubbers, a resorcin-formaldehyde-latex (RFL) adhesive used for glass fibers, a raw material of molding materials for hoses, tubes, belts, gaskets, and packings, and the like, and is industrially highly valuable.

As described above, the aqueous dispersion of α-olefin-(meth)acrylic acid ester-based rubber particles of the present invention has better oil resistance to be usable as a latex component of adhesives such as RFL adhesives, or a binder material or a coating material for various plastics. In particular, the aqueous dispersion is suitably used as a latex component of RFL adhesives for glass fibers or organic fibers.

The present invention also encompasses a resorcin-formalin-latex adhesive containing the aqueous dispersion of α-olefin-(meth)acrylic acid ester-based rubber particles of the present invention as a latex component.

The RFL adhesive of the present invention may contain a vulcanizing agent (crosslinking agent) so as to further enhance the adhesiveness.

Examples of the vulcanizing agent include zinc oxide, sulfur vulcanizing agents, and organic peroxides.

Examples of the sulfur vulcanizing agents include: sulfur commonly used as a vulcanizing agent for rubber, such as powdered sulfur, highly dispersible sulfur, and insoluble sulfur; thiurams such as tetramethylthiuram disulfide, tetraethylthiuram disulfide, tetrabutylthiuram disulfide, tetramethylthiuram monosulfide, and dipentamethylenethiuram tetrasulfide; dithiocarbamates such as pentaethylene dithiocarbamate piperidine salt, pipecolin pipecolyl dithiocarbamate, zinc dimethyldithiocarbamate, zinc diethyldithiocarbamate, zinc dibutyldithiocarbamate, zinc N-ethyl-N-phenyl dithiocarbamate, zinc N-pentamethylene dithiocarbamate, zinc dibenzyldithiocarbamate, sodium dimethyldithiocarbamate, sodium diethyldithiocarbamate, sodium dibutyldithiocarbamate, copper dimethyldithiocarbamate, ferric dimethyldithiocarbamate, and tellurium diethyldithiocarbamate; xanthates such as zinc butylxanthate, zinc isopropylxanthate, and sodium isopropylxanthate; sulfenamides such as N-cyclohexyl-2-benzothiazole sulfenamide, N-t-butyl-2-benzothiazole sulfenamide, N-oxydiethylene-2-benzothiazole sulfenamide, and N,N-diisopropyl-2-benzothiazole sulfenamide; and thiazoles such as 2-mercaptobenzothiazole and dibenzothiazyl disulfide. These may be used alone, or in combination of two or more thereof.

In the case where the sulfur vulcanizing agent is used as the vulcanizing agent, the lower limit of the amount thereof relative to 100 parts by mass of the α-olefin-(meth)acrylic acid ester-based rubber is preferably 0.05 parts by mass, and the upper limit thereof is preferably 5.0 parts by mass. The lower limit is more preferably 0.1 parts by mass and the upper limit is more preferably 4.0 parts by mass.

Examples of the organic peroxides include cumene hydroperoxide, di-t-butylperoxide, t-butylcumylperoxide, dicumylperoxide, 2,5-dimethyl-2,5-di-(t-butylperoxy)hexane, 1,3-bis(t-butylperoxyisopropyl)benzene, n-butyl-4,4-bis(t-butylperoxy)valerate, 1,1-bis(t-butylperoxy)-3,3,5-trimethyl cyclohexane, 2,2-bis(t-butylperoxy)butane, benzoylperoxide, p-chlorobenzoylperoxide, 2,4-dichlorobenzoylperoxide, t-butylperoxybenzene, and vinyl tris(t-butylperoxy)silane. Preferred among these is dicumylperoxide.

In the case where the organic peroxide is used as the vulcanizing agent, the lower limit of the amount thereof relative to 100 parts by mass of the α-olefin-(meth)acrylic acid ester-based rubber is preferably 0.1 parts by mass, and the upper limit thereof is preferably 1.0 parts by mass. The lower limit is more preferably 0.3 parts by mass and the upper limit is more preferably 0.8 parts by mass. The upper limit is still more preferably 0.5 parts by mass.

The vulcanizing agent may be added when the RFL adhesive of the present invention is prepared. Alternatively, the vulcanizing agent may be preliminarily added to the aqueous dispersion of α-olefin-(meth)acrylic acid ester-based rubber particles of the present invention before preparation of the RFL adhesive. In the case of preliminarily adding the vulcanizing agent to the aqueous dispersion, the vulcanizing agent may be added to the produced aqueous dispersion of α-olefin-(meth)acrylic acid ester-based rubber particles of the present invention. Alternatively, the vulcanizing agent may be added to the organic solution or aqueous medium used for production of the aqueous dispersion of α-olefin-(meth)acrylic acid ester-based rubber particles of the present invention.

The RFL adhesive of the present invention may contain additives such as a rubber latex, a thickener, an adhesiveness imparting agent, and a plasticizer in order to improve the application properties or adhesiveness thereof. Such additives may be added to the prepared RFL adhesive. Alternatively, they may be added to the aqueous dispersion of α-olefin-(meth)acrylic acid ester-based rubber particles of the present invention before preparation of the RFL adhesive. Depending on the type of the additive, it may be added to the organic solution or an aqueous dispersing medium used for production of the aqueous dispersion of α-olefin-(meth)acrylic acid ester-based rubber particles of the present invention. Preferably, the additives are each independently added as an aqueous solution or an aqueous dispersion thereof or added together as an aqueous solution or an aqueous dispersion of a mixture thereof.

### -Advantageous Effects of Invention

The present invention provides an aqueous dispersion of α-olefin-(meth)acrylic acid ester-based rubber particles having better storage stability and ensuring better oil resistance of a molded body. The present invention also provides a method for producing the aqueous dispersion, and a molded body and a resorcin-formalin-latex adhesive each produced using the aqueous dispersion.

### DESCRIPTION OF EMBODIMENTS

The present invention will be described in more detail with reference to, but not limited to, examples.

### (Example 1)

A 500-mL separable flask was charged with 20 parts by mass of Vamac G (available from Du Pont-Mitsui Polychemicals, Mooney viscosity of 16.5) as an α-olefin-(meth)acrylic acid ester-based rubber and 180 parts by mass of toluene, and the contents were stirred at 55°C for four hours to be dissolved. To the obtained toluene solution was added an aqueous solution containing 1.0 parts by mass of potassium oleate as a surfactant dissolved in 100 parts by mass of water, and stirred with a homomixer (available from Primix Corporation, "Mark II 2.5 type") for six minutes to prepare an emulsion. The number of rotations and temperature during the stirring were set to 12,000 rpm and 40°C. The obtained emulsion was heated to 40°C to 70°C under reduced pressure of 40 to 90 kPa for distillation of toluene, thereby preparing an aqueous dispersion of α-olefin-(meth)acrylic acid ester-based rubber particles.

### (Example 2)

A 500-mL separable flask was charged with 20 parts by mass of Vamac GLS (available from Du Pont-Mitsui Polychemicals, Mooney viscosity of 18) as an α-olefin-(meth)acrylic acid ester-based rubber, 162 parts by mass of toluene, and 18 parts by mass of isopropyl alcohol, and the contents were stirred at 60°C for four hours to be dissolved. To the obtained organic solution was added an aqueous solution containing 0.8 parts by mass of sodium dioctylsulfosuccinate as a surfactant dissolved in 100 parts by mass of water, and stirred with a homomixer (available from Primix Corporation, "Mark II 2.5 type") for six minutes to prepare an emulsion. The number of rotations and temperature during the stirring were set to 12,000 rpm and 40°C. The obtained emulsion was heated to 40°C to 70°C under reduced pressure of 40 to 90 kPa for distillation of toluene and isopropyl alcohol, thereby preparing an aqueous dispersion of α-olefin-(meth)acrylic acid ester-based rubber particles.

### (Example 3)

A 500-mL separable flask was charged with 20 parts by mass of DENKA ANX-3 (available from Denki Kagaku Kogyo Kabushiki Kaisha, Mooney viscosity of 45) as an α-olefin-(meth)acrylic acid ester-based rubber, 162 parts by mass of toluene, and 18 parts by mass of isopropyl alcohol, and the contents were stirred at 60°C for four hours to be dissolved. To the obtained organic solution was added an aqueous solution containing 1.6 parts by mass of sodium polyoxyethylene lauryl ether sulfate as a surfactant dissolved in 100 parts by mass of water, and stirred with a homomixer (available from Primix Corporation, "Mark II 2.5 type") for six minutes to prepare an emulsion. The number of rotations and temperature during the stirring were set to 12,000 rpm and 40°C. The obtained emulsion was heated to 40°C to 70°C under reduced pressure of 40 to 90 kPa for distillation of toluene and isopropyl alcohol, thereby preparing an aqueous dispersion of α-olefin-(meth)acrylic acid ester-based rubber particles.

### (Example 4)

A 1-L pressure-resistant autoclave equipped with a turbine type stirring blade (diameter: 50 mm) was charged with 160 parts by mass of Vamac GLS (available from Du Pont-Mitsui Polychemicals, Mooney viscosity of 18) as an α-olefin-(meth)acrylic acid ester-based rubber, 224 parts by mass of deionized water, and 16 parts by mass of an ethylene oxide-propylene oxide copolymer (available from ADEKA Corporation, "Pluronic F108", mass average molecular weight of 15,500, ethylene oxide unit content of 80% by mass) as a surfactant, and sealed. Then, the stirrer was activated, and the temperature inside the autoclave was raised to 180°C with stirring at the number of rotations of 500 rpm. Stirring was further kept for 15 minutes while the inside temperature was maintained at 180°C. The contents were then cooled to a room temperature, thereby preparing an aqueous dispersion of α-olefin-(meth)acrylic acid ester-based rubber particles.

### (Example 5)

An aqueous dispersion of α-olefin-(meth)acrylic acid ester-based rubber particles was prepared in the same manner as in Example 2, except that the amount of the sodium dioctylsulfosuccinate used as a surfactant was changed to 3.0 parts by mass.

### (Example 6)

An aqueous dispersion of α-olefin-(meth)acrylic acid ester-based rubber particles was prepared in the same manner as in Example 2, except that the amount of the sodium dioctylsulfosuccinate used as a surfactant was changed to 0.2 parts by mass.

### (Comparative Example 1)

An aqueous dispersion of α-olefin-(meth)acrylic acid ester-based rubber particles was prepared in the same manner as in Example 2, except that the amount of the sodium dioctylsulfosuccinate used as a surfactant was changed to 3.5 parts by mass.

### (Comparative Example 2)

The production process was carried out in the same manner as in Example 2, except that the amount of sodium dioctylsulfosuccinate as a surfactant was changed to 0.16 parts by mass. Then, lumps were formed during distillation of toluene, and an aqueous solution could not be obtained.

### (Comparative Example 3)

A chlorosulfonated polyethylene latex (available from Sumitomo Seika Chemicals Co., Ltd., "CEPOREX CSM") was prepared as an aqueous dispersion.

### <Evaluation>

The aqueous dispersions obtained in the examples and comparative examples were evaluated for the following parameters. Table 1 shows the results.

Since no aqueous dispersion was prepared in Comparative Example 2, the evaluation described below was not performed.

### (Average particle size of rubber particles)

The average particle size of rubber particles of each of the aqueous dispersions obtained in Examples 1 to 6 and Comparative Example 1 was measured using a laser diffraction particle size analyzer (available from Shimadzu Corporation, "SALD-2000J").

### (Storage stability)

A 50-mL container was charged with 40 g of each of the aqueous dispersion obtained in Examples 1 to 6 and Comparative Example 1, sealed, and left in an environment of a temperature at 25°C. The state of the aqueous dispersion was visually checked after three months. The storage stability was evaluated based on the following criteria: the case where no phase separation was observed was rated "○ (good)"; the case where phase separation was partially observed was rated "Δ (fair)"; and the case where complete phase separation was observed was rated "× (poor)".

### (Bleeding of surfactant)

An amount of 10 g of each of the aqueous dispersions obtained in Examples 1 to 6 and Comparative Example 1 was placed in a Petri dish (φ120 mm) and dried at 40°C for 12 hours to give a coating film. The state of the obtained coating film was visually observed. Bleeding of the surfactant was evaluated based on the following criteria: the case where bleeding of the surfactant from the surface of the coating film was not observed was rated "○ (good)"; the case where slight bleeding of the surfactant from the surface of the coating film was observed was rated "Δ (fair)"; and the case where much bleeding of the surfactant from the surface of the coating film was observed was rated "× (poor)".

### (Oil resistance)

An amount of 220 g of each of the aqueous dispersions obtained in Examples 1 to 6 and Comparative Examples 1 and 3 was placed in a Petri dish (φ120 mm) and dried at 80°C for 12 hours to give a coating film. The obtained coating film was sandwiched between Teflon (®) sheets and molded under pressure at 20 Mpa and 120°C for one minute using a press machine, thereby preparing a sheet with a thickness of about 2 mm. An amount of 2 g of the obtained sheet was immersed in 30 g of a motor oil (available from Toyota Motor Corporation, "Toyota Castle SN 0W-20") at 150°C for 10 hours. The mass of the sheet before and after the immersion in the motor oil was measured to obtain the mass increasing rate due to the immersion.

A smaller mass increase means better oil resistance. When the mass increasing rate is 20% or lower, the oil resistance is better.

**[Table 1]**

| | | | Example | | | | | | Comparative Example | | |
|---|---|---|---|---|---|---|---|---|---|---|---|
| | | | 1 | 2 | 3 | 4 | 5 | 6 | 1 | 2 | 3 |
| Composition (parts by mass) | α-olefin-(meth)acrylic acid ester-based rubber | Vamac G (Du Pont-Mitsui Polychemicals, Mooney viscosity of 16.5) | 20 | - | - | - | - | - | - | - | - |
| | | Vamac GLS (Du Pont-Mitsui Polychemicals, Mooney viscosity of 18) | - | 20 | - | 160 | 20 | 20 | 20 | 20 | - |
| | | DENKA ANX-3 (Denka Company Ltd., Mooney viscosity of 45) | - | - | 20 | - | - | - | - | - | - |
| | Surfactant | Potassium oleate | 1.0 | - | - | - | - | - | - | - | - |
| | | Sodium dioctylsulfosuccinate | - | 0.8 | - | - | 3.0 | 0.2 | 3.5 | 0.16 | - |
| | | Sodium polyoxyethylene lauryl ether sulfate | - | - | 1.6 | - | - | - | - | - | - |
| | | Ethylene oxide-propylene oxide copolymer | - | - | - | 16 | - | - | - | - | - |
| | Aqueous medium | Water | 100 | 100 | 100 | 224 | 100 | 100 | 100 | 100 | - |
| | Chlorosulfonated polyethylene latex (Sumitomo Seika Chemicals Co., Ltd., "CEPOREX CSM") | | - | - | - | - | - | - | - | - | 100 |
| Amount of surfactant relative to 100 parts by mass of α-olefin-(meth)acrylic acid ester-based rubber particles (parts by mass) | | | 5.0 | 4.0 | 8.0 | 10 | 15 | 1.0 | 17.5 | 0.8 | - |
| Evaluation | Average particle size of rubber particles (µm) | | 3.0 | 0.6 | 2.5 | 1.0 | 0.5 | 4.5 | 0.4 | - | - |
| | Storage stability | | ○ | ○ | ○ | ○ | ○ | Δ | ○ | - | - |
| | Bleeding of surfactant | | ○ | ○ | ○ | ○ | Δ | ○ | × | - | - |
| | Oil resistance (mass increasing rate (%)) | | 20 | 14 | 16 | 14 | 15 | 14 | 18 | - | 107 |

| | | | | | | | | | | | |
|---|---|---|---|---|---|---|---|---|---|---|---|
| * An aqueous dispersion could not be prepared in Comparative Example 2. | | | | | | | | | | | |

Table 1 shows that the aqueous dispersions produced in Examples 1 to 5 are better in storage stability.

Bleeding of the surfactant was not observed in the molded bodies (coating films) obtained from the aqueous dispersions produced in Examples 1 to 4 and 6. By contrast, bleeding of the surfactant was observed in the molded body (coating film) obtained from the aqueous dispersion produced in Comparative Example 1.

In addition, all of the coating films obtained from the aqueous dispersions produced in Examples 1 to 6 were better in oil resistance, with the mass increasing rate of 20% or less in the evaluation of the oil resistance. By contrast, the coating film obtained from the latex of Comparative Example 3 had poor oil resistance with the mass increasing rate of higher than 100% in the evaluation of the oil resistance.

As above, the aqueous dispersion of α-olefin-(meth)acrylic acid ester-based rubber particles of the present invention is an aqueous dispersion having better storage stability and ensuring better oil resistance of a molded body.

### INDUSTRIAL APPLICABILITY

The present invention provides an aqueous dispersion of α-olefin-(meth)acrylic acid ester-based rubber particles having better storage stability and ensuring better oil resistance of a molded body. The present invention also provides a method for producing the aqueous dispersion, and a molded body and a resorcin-formalin-latex adhesive each produced using the aqueous dispersion.

## Claims

1. An aqueous dispersion of α-olefin-(meth)acrylic acid ester-based rubber particles comprising:
an aqueous medium,
a surfactant; and
α-olefin-(meth)acrylic acid ester-based rubber particles,
the aqueous dispersion containing the surfactant in an amount of 1 to 15 parts by mass relative to 100 parts by mass of the α-olefin-(meth)acrylic acid ester-based rubber particles.

2. The aqueous dispersion of α-olefin-(meth)acrylic acid ester-based rubber particles according to claim 1,
wherein the α-olefin-(meth)acrylic acid ester-based rubber particles are composed of an α-olefin-(meth)acrylic acid ester-based rubber containing at least one selected from the group consisting of an ethylene-(meth)acrylic acid ester copolymer, an ethylene-(meth)acrylic acid ester-unsaturated carboxylic acid copolymer, and an ethylene-vinyl acetate-(meth)acrylic acid ester copolymer.

3. The aqueous dispersion of α-olefin-(meth)acrylic acid ester-based rubber particles according to claim 1 or 2,
wherein the α-olefin-(meth)acrylic acid ester-based rubber particles are composed of an α-olefin-(meth)acrylic acid ester-based rubber having a Mooney viscosity (ML₁₊₄) measured at 100°C in conformity with DIN53 523 of 5 to 80.

4. The aqueous dispersion of α-olefin-(meth)acrylic acid ester-based rubber particles according to claim 1, 2, or 3,
wherein the α-olefin-(meth)acrylic acid ester-based rubber particles have an average particle size of 0.1 to 5 µm.

5. The aqueous dispersion of α-olefin-(meth)acrylic acid ester-based rubber particles according to claim 1, 2, 3, or 4,
wherein the surfactant contains at least one compound selected from the group consisting of a sulfosuccinate, a polyoxyalkylene (alkyl or alkenyl) ether sulfate, a fatty acid salt, and an ethylene oxide-propylene oxide copolymer.

6. The aqueous dispersion of α-olefin-(meth)acrylic acid ester-based rubber particles according to claim 1, 2, 3, 4, or 5, further containing a polymeric dispersion stabilizer.

7. A method for producing the aqueous dispersion of α-olefin-(meth)acrylic acid ester-based rubber particles according to claim 1, 2, 3, 4, 5, or 6, the method comprising:
a step of mixing an organic solution containing an α-olefin-(meth)acrylic acid ester-based rubber dissolved in an organic solvent and an aqueous solution containing a surfactant dissolved in an aqueous medium to prepare an emulsion; and
a step of distilling off the organic solvent from the obtained emulsion.

8. A method for producing the aqueous dispersion of α-olefin-(meth)acrylic acid ester-based rubber particles according to claim 1, 2, 3, 4, 5, or 6, the method comprising:
a step of mixing an α-olefin-(meth)acrylic acid ester-based rubber, a surfactant, and an aqueous medium to prepare a liquid mixture; and
a step of emulsifying the obtained liquid mixture by heating to a temperature not lower than the softening temperature of the α-olefin-(meth)acrylic acid ester-based rubber.

9. A molded body produced using the aqueous dispersion of α-olefin-(meth)acrylic acid ester-based rubber particles according to claim 1, 2, 3, 4, 5, or 6.

10. A resorcin-formalin-latex adhesive comprising the aqueous dispersion of α-olefin-(meth)acrylic acid ester-based rubber particles according to claim 1, 2, 3, 4, 5, or 6 as a latex component.
